# EUROPÄISCHE PATENTSCHRIFT

(11) **EP 3 793 807 B1**
(45) Veröffentlichungstag und Bekanntmachung des Hinweises auf die Patenterteilung: **27.09.2023**
(21) Anmeldenummer: 19726569.7
(22) Anmeldetag: 22.03.2019
(51) Int. Cl.: B29C 65/00, F01N 13/08, F01N 13/18, F16L 17/02, F16J 15/06, F16J 15/10, F16L 21/02, F16L 21/03, F16L 21/035, F16L 21/04, F16L 59/14

(54) **DICHTUNG ZUM ABDICHTEN EINES SPALTES ZWISCHEN ZWEI ABGASE FÜHRENDEN ROHREN**
GASKET FOR SEALING A GAP BETWEEN TWO EXHAUST GAS CONTAINING PIPES
JOINT POUR ÉTANCHÉIFIER UN INTERSTICE ENTRE DEUX CONDUITS CONTENANT DES GAZ D'ÉCHAPPEMENT

(30) Priorität: 16.05.2018 DE 102018003952
(43) Veröffentlichungstag der Anmeldung: 24.03.2021
(73) Patentinhaber: DEUTZ Aktiengesellschaft, 51149 Köln (DE)
(72) Erfinder: LEYH, Gerald, 74545 Michelfeld (DE); SCHUMACHER, Ulrike, 51427 Bergisch-Gladbach (DE); KRINGELS, Matthias, 53332 Bornheim (DE)
(86) Internationale Anmeldenummer: PCT/EP2019/000091
(87) Internationale Veröffentlichungsnummer: WO 2019/219231

(56) Entgegenhaltungen:
- EP-A1- 3 269 958
- CN-A- 105 370 369
- US-A- 4 516 782
- US-A- 4 756 561
- US-A- 4 795 166
- US-A1- 2002 171 240
- US-B2- 7 775 561

## Beschreibung

Die Erfindung betrifft eine Dichtung zum Abdichten eines Spaltes zwischen zwei Abgase führenden Rohren.

Aus dem Stand der Technik sind Dichtringe bekannt, die aus einem Drahtgestrick und einer Silikatfasereinlage gefertigt sind. Die Dichtringe sind zwar temperaturbeständig, jedoch ist ihre Dichtwirkung im Betrieb nicht zufriedenstellend. In der Folge kommt es zu Ablagerungen, insbesondere zu Rußablagerungen an benachbarten Bauteilen oder, bei größeren Leckagemengen, sogar zu Schäden an den angrenzenden Bauteilen. Wenn die Pressung der Dichtung erhöht wird, um die Dichtwirkung zu steigern, dann lassen sich die Dichtringe aufgrund hoher Montagekräfte nur noch schlecht montieren. Dichtungen mit wärmeexpandierfähigem Material sind unter anderem aus der US4795166A, der US4756561A, der US4516782A oder der US20020171240A1 bekannt.

Die Erfindung hat die Aufgabe, eine Dichtung der eingangs genannten Art dahingehend zu verbessern, dass sie zuverlässig dichtet und gleichzeitig leicht zu montieren ist.

Zur Lösung der Aufgabe wird eine Dichtungsanordnung in einem abzudichtenden Spalt zwischen zwei abgasführenden Rohren vorgeschlagen, wobei in dem Spalt eine Dichtung aus einem unter Wärmeeinwirkung expandierfähigen Material hergestellt ist, wobei hinter der Dichtung ein Stahlring angeordnet ist und an einer der Dichtungen gegenüberliegenden Seiten des Stahlrings eine Feder montiert ist, und der Stahlring mit einer Spielpassung koaxial zwischen den zwei Rohren montiert ist.

Bereits ab einer ersten Inbetriebnahme kann die Dichtung expandieren und einen abzudichtenden Spalt zwischen zwei Abgase führenden Rohren verschließen. Abhängig von den Druckverhältnissen und der Größe des Spaltes kann die Dichtung in den Spalt hineingedrückt werden. Die gewünschte Dichtwirkung tritt also erst während der ersten Inbetriebnahme ein, vorher noch nicht. Deshalb kann die Dichtung leicht auf oder in das die Dichtung aufnehmende Rohr geschoben werden.

Hinter der Dichtung ist erfindungsgemäß ein Stahlring angeordnet. Der Stahlring ist mit einer Spielpassung koaxial zwischen den zwei Rohren montiert. Auf diese Weise wird eine gasbeaufschlagte Stirnseite der Dichtung reduziert. Durch die Spielpassung zwischen den beiden Rohren wird ein Dichtungslabyrinth gebildet, so dass die Dichtwirkung optimiert wird. Die Labyrinthgänge des Dichtungslabyrinths werden durch kleine Spalten zwischen dem Stahlring und den Rohren und zwischen dem Stahlring und der Dichtung gebildet.

An einer der Dichtung gegenüberliegenden Seite des Stahlrings ist erfindungsgemäß eine Feder montiert. Sie drückt den Stahlring gegen die Dichtung. Dadurch wird zum einen die Position des Stahlrings im Betrieb fixiert. Zum anderen wird durch die Feder die Dichtung vor der ersten Inbetriebnahme in ihrer Position gehalten.

In der Praxis zeigt die Dichtung eine gute Dichtwirkung, wenn das expandierfähige Material ein Mineralwerkstoff, insbesondere ein Blähglimmer ist.

Zur Verbesserung der Dichtwirkung ist es außerdem vorteilhaft, wenn die Dichtung eine bestimmte Elastizität aufweist. Deshalb kann das expandierfähige Material als ein Faden, insbesondere als ein knäuelförmiger Faden und/oder eine Folie ausgebildet sein. Da die Dichtung frei von einem Elastomerwerkstoff ist, kann sie nicht verhärten, wodurch ihre Elastizität eingeschränkt würde.

Die Dichtung kann ausschließlich oder zusätzlich zu einem Drahtgestrick das expandierfähige Material aufweisen. Das expandierfähige Material kann in das Drahtgestrick eingearbeitet, vorzugsweise damit verwebt sein. Auf diese Weise erlangt die Dichtung eine bestimmte Formfestigkeit.

In einer bevorzugten Ausführungsform kann die Dichtung ein rotationssymmetrischer Dichtring sein, der somit auf oder in Rohre mit einem rotationssymmetrischen Querschnitt montiert werden kann.

Die Dichtung kann eine Übergangspassung mit mindestens einem der zwei Rohre bilden. Somit ist sie leicht montierbar und rutscht unmittelbar nach der Montage nicht mehr so leicht von einem der mindestens zwei Rohre herunter.

Die Erfindung betrifft eine Dichtungsanordnung in dem abzudichtenden Spalt zwischen den zwei Rohren gemäß Anspruch 1. Mögliche Ausgestaltungen der erfindungsgemäßen Dichtungsanordnung werden in den Ansprüchen 2 bis 6 beschrieben.

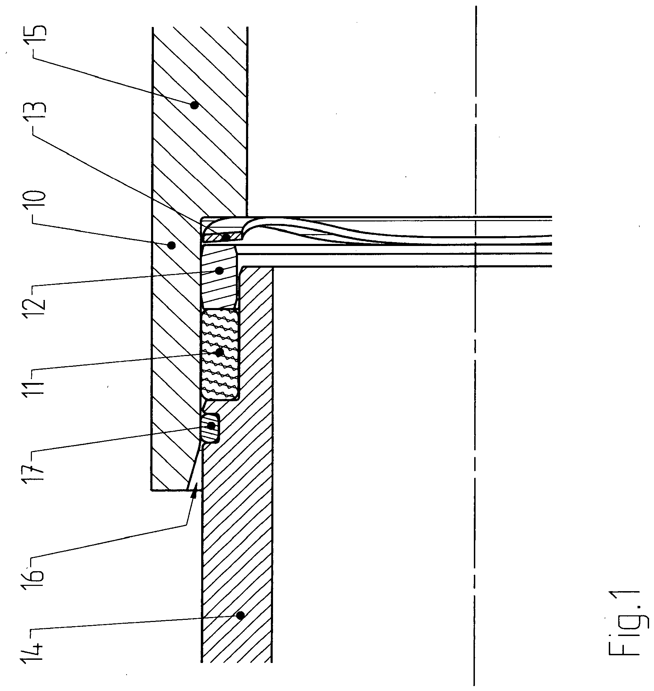

Nachfolgend wird ein bevorzugtes Ausführungsbeispiel einer erfindungsgemäßen Anordnung anhand der beiliegenden Zeichnung näher erläutert.

Die einzige Figur zeigt eine Dichtungsanordnung 10 mit einer Dichtung 11, einem Stahlring 12 und einer Feder 13. Die Dichtung 11, der Stahlring 12 und die Feder 13 sind zwischen zwei Abgasen führenden Rohren 14 und 15 in axialer Richtung hintereinander montiert.

Die Dichtung 11 dichtet einen Spalt 16 ab. Die Dichtung 11 ist aus einem unter Wärmeeinwirkung expandierfähigen Material hergestellt. Sobald die beiden Rohre 14 und 15 ein erstes Mal mit heißen Abgasen durchströmt werden, dehnt sich die Dichtung 11 aus und dichtet den Spalt 16 zuverlässig ab.

Die Feder 13 drückt den Stahlring 12 gegen die Dichtung 11. Somit wird die Dichtung 11 vor ihrer ersten Inbetriebnahme in einer für sie vorgesehen Position gehalten. Außerdem fixiert die Feder 13 den Stahlring 12 in seiner Position. Da der Stahlring 12 mit einer Spielpassung zwischen den zwei Rohren 14 und 15 montiert ist, befindet sich zwischen den beiden Rohren 14 und 15 bedingt durch die Spielpassung ein Dichtungslabyrinth.

Der Spalt 16 wird außerdem durch einen Dichtring 17 abgedichtet. Der Dichtring 17 ist aus einem Elastomerwerkstoff gefertigt. Er dichtet den Spalt 16 vor der ersten Inbetriebnahme ab. Somit verhindert der Dichtring 17 bei einem Kaltleckagetest, der an einem Fertigungsband nach Abschluss eines Montageprozesses mit einem nicht erwärmten Gas, also noch vor der ersten Inbetriebnahme, durchgeführt wird, dass das nicht erwärmte Gas durch den Spalt 16 entweichen kann. Nach der ersten Inbetriebnahme, wenn heiße Abgase durch die Rohre 14 und 15 strömen, wird der Dichtring 17 durch die hohe Betriebstemperatur zerstört.

## Patentansprüche

1. Dichtungsanordnung in **einem** abzudichtenden Spalt zwischen zwei Abgase führenden Rohren **(14,15),** wobei in dem Spalt (16) eine Dichtung (11) **aus einem unter Wärmeeinwirkung expandierfähigen Material hergestellt ist, dadurch gekennzeichnet, dass hinter der Dichtung (11) ein Stahlring (12) angeordnet ist und an einer der Dichtung (11) gegenüberliegenden Seite des Stahlrings (12) eine Feder (13) montiert ist, wobei der Stahlring (12) mit einer Spielpassung koaxial zwischen den zwei Rohren (14, 15) montiert ist.**

2. Dichtungsanordnung nach Anspruch 1, **dadurch gekennzeichnet, dass** die Dichtung (11) eine Übergangspassung mit mindestens einem der zwei Rohre (14, 15) bildet.

3. Dichtungsanordnung nach Anspruch 1, **dadurch gekennzeichnet, dass** das expandierfähige Material ein Mineralwerkstoff, insbesondere ein Blähglimmer ist.

4. Dichtungsanordnung nach einem der vorhergehenden Ansprüche, **dadurch gekennzeichnet, dass** das expandierfähige Material als ein Faden, insbesondere als ein knäuelförmiger Faden und/oder eine Folie ausgebildet ist.

5. Dichtungsanordnung nach einem der vorhergehenden Ansprüche, **dadurch gekennzeichnet, dass** das expandierfähige Material in ein Drahtgestrick eingearbeitet ist.

6. Dichtungsanordnung nach einem der vorhergehenden Ansprüche, **dadurch gekennzeichnet, dass** die Dichtung (11) ein rotationssymmetrischer Dichtring ist.

## Claims

1. Sealing arrangement in a gap to be sealed off between two exhaust-gas-conducting tubes (14, 15), wherein a seal (11) produced from a material which is expandable under the action of heat is in the gap (16), **characterized in that** a steel ring (12) is arranged behind the seal (11) and a spring (13) is mounted on a side of the steel ring (12) that is situated opposite the seal (11), wherein the steel ring (12) is mounted coaxially between the two tubes (14, 15) with a clearance fit.

2. Sealing arrangement according to Claim 1, **characterized in that** the seal (11) forms a transition fit with at least one of the two tubes (14, 15).

3. Sealing arrangement according to Claim 1, **characterized in that** the expandable material is a mineral material, in particular an expandable mica.

4. Sealing arrangement according to one of the preceding claims,
**characterized in that** the expandable material is in the form of a thread, in particular in the form of a thread formed like a ball of thread and/or in the form of a film.

5. Sealing arrangement according to one of the preceding claims,
**characterized in that** the expandable material is incorporated in a wire mesh.

6. Sealing arrangement according to one of the preceding claims,
**characterized in that** the seal (11) is a rotationally symmetrical sealing ring.

## Revendications

1. Dispositif d'étanchéité placé dans un espace à étanchéifier ménagé entre deux tubes (14, 15) de conduction de gaz d'échappement,
une garniture d'étanchéité (11) en une matière qui est expansible sous l'action de la chaleur étant placée dans l'espace (16),
**caractérisé en ce que**
une bague en acier (12) est disposée derrière la garniture d'étanchéité (11) et un ressort (13) est monté sur un côté de la bague en acier (12) qui est opposé à la garniture d'étanchéité (11), la bague en acier (12) étant montée avec jeu coaxialement entre les deux tubes (14, 15).

2. Dispositif d'étanchéité selon la revendication 1, **caractérisé en ce que** la garniture d'étanchéité (11) forme un ajustement de transition avec l'un au moins des deux tubes (14, 15).

3. Dispositif d'étanchéité selon la revendication 1, **caractérisé en ce que** la matière expansible est une matière minérale, notamment du mica gonflé.

4. Dispositif d'étanchéité selon l'une des revendications précédentes, **caractérisé en ce que** la matière expansible est réalisé sous la forme d'un fil, en particulier sous la forme d'un fil en pelote et/ou d'un film.

5. Dispositif d'étanchéité selon l'une des revendications précédentes, **caractérisé en ce que** la matière expansible est incorporée dans un treillis métallique.

6. Dispositif d'étanchéité selon l'une des revendications précédentes, **caractérisé en ce que** la garniture d'étanchéité (11) est une bague d'étanchéité à symétrie de rotation.
